# EUROPEAN PATENT APPLICATION

(11) **EP 4 242 360 A1**
(43) Date of publication of application: **13.09.2023**
(21) Application number: 22779107.6
(22) Date of filing: 31.03.2022
(51) Int. Cl.: C25D 15/00, C01B 32/194

(54) **COMPOUND DISPERSANT AND PREPARATION METHOD, AND MIXED ELECTROPLATING SOLUTION AND PREPARATION METHOD**

(30) Priority: 01.04.2021 CN 202110354730
(71) Applicant: Zhejiang Chint Electrics Co., Ltd., Yueqing, Zhejiang 325603 (CN)
(72) Inventor: JI, Shen, Yueqing, Zhejiang 325603 (CN); XU, Zhengli, Yueqing, Zhejiang 325603 (CN); ZHOU, Jinyu, Yueqing, Zhejiang 325603 (CN); ZENG, Lang, Yueqing, Zhejiang 325603 (CN); SHEN, Qi, Yueqing, Zhejiang 325603 (CN); LIN, Junyu, Yueqing, Zhejiang 325603 (CN); ZHENG, Jianyong, Yueqing, Zhejiang 325603 (CN); HU, Yiming, Yueqing, Zhejiang 325603 (CN); WANG, Chuan, Yueqing, Zhejiang 325603 (CN); LIN, Rongzhen, Yueqing, Zhejiang 325603 (CN)
(74) Representative: Petraz, Gilberto Luigi
(86) International application number: PCT/CN2022/084645
(87) International publication number: WO 2022/206927

(57) **Abstract**

The present invention relates to the field of material technologies, and more particularly to a compound dispersant which is composed of distilled water, a nonionic surfactant, an anionic surfactant and a wetting agent, wherein the nonionic surfactant is a Tween compound, and the wetting agent includes a hydrocarbyl sulfate salt compound and a hydrocarbyl sulfonate salt compound; and the compound dispersant can block or slow down agglomeration of graphene in a dispersion solution. The present invention further relates to a preparation method of the compound dispersant, which is simple to operate; and the prepared compound dispersant can effectively block or slow down the agglomeration of graphene in the dispersion solution. The present invention further relates to a mixed electroplating solution including the compound dispersant, in which the graphene is dispersed uniformly and stably. The present invention further relates to a preparation method of the mixed electroplating solution, which is simple to operate, wherein graphene is distributed uniformly and stably.

## Description

### TECHNICAL FIELD

The present invention relates to the field of material technologies, and more particularly to a compound dispersant, a preparation method of the compound dispersant, a mixed electroplating solution including the compound dispersant, and a preparation method of the mixed electroplating solution.

### BACKGROUND ART

Graphene is a two-dimensional crystalline material with excellent electrical, thermal and mechanical properties, wherein single-layer graphene has the thermal conductivity as high as 5150 W(m K) and the carrier mobility up to 15000 cm²(V·S); and a metal-based graphene composite electrical contact material has superior electrical conductivity, wear resistance and thermal conductivity compared to other reinforced phase composite electrical contact materials. In addition, the graphene has good stability, without any dielectric corrosion problem after being compounded with a metal.

There is a strong π-π force between graphene layers, such that single-layer graphene dispersed in a dispersion solution is easily agglomerated to form graphite again, which seriously affects its performances. Due to special hydrophobic and oleophobic structures, it is in need of adding special surfactants and penetrants that the graphene can be stably dispersed in water or other solvents, such that the graphene can be electroplated on the metal surface to obtain the metal-based graphene composite electrical contact material.

### SUMMARY OF THE INVENTION

Objects of the present invention are to overcome the defects of the prior art and provide a compound dispersant that can block or slow down the agglomeration of graphene in a dispersion solution; provide a preparation method of the compound dispersant, which is simple to operate, wherein the prepared compound dispersant can effectively block the agglomeration of graphene in the dispersion solution; also provide a mixed electroplating solution, in which graphene is dispersed uniformly and stably; and further provide a preparation method of the mixed electroplating solution, which is simple to operate, wherein graphene in the prepared mixed electroplating solution is dispersed uniformly and stably.

To achieve the above object, the present invention adopts the following technical solution:
A compound dispersant, composed of distilled water, a nonionic surfactant and a wetting agent, wherein the nonionic surfactant is a Tween compound, and the wetting agent includes a hydrocarbyl sulfate salt compound and a hydrocarbyl sulfonate salt compound.

Further, the hydrocarbyl sulfate salt compound comprises sodium 2-ethylhexyl sulfate.

Further, a mass fraction of the hydrocarbyl sulfate salt compound in the compound dispersant is 5-8%.

Further, the hydrocarbyl sulfonate salt compound comprises at least one of dioctyl sulfosuccinate sodium salt and dihexyl sodium sulfosuccinate.

Further, a mass fraction of the hydrocarbyl sulfonate salt compound in the compound dispersant is 6-10%.

Further, the Tween-like compound comprises Tween-20.

Further, a mass fraction of the Tween compound in the compound dispersant is 4-6%.

A preparation method of a compound dispersant, comprising the following steps:
Step 1, adding a hydrocarbyl sulfate salt compound and a Tween compound to distilled water at a temperature T0, 40°C≤T0≤60°C, and stirring for time t0, 5min≤t0≤10min; and
Step 2, adding a hydrocarbyl sulfonate salt compound to the mixture obtained in Step 1, supplementing with distilled water, stirring for t1 to prepare the compound dispersant, 5min≤t1≤15min.

A mixed electroplating solution, comprising the compound dispersant, a silver-based aqueous solution and graphene, the silver-based aqueous solution comprises KCN and silver ions.

Further, a mass-volume concentration of KCN in the silver-based aqueous solution is 90.0-200.0g/L.

Further, a mass-volume concentration of silver ions in the silver-based aqueous solution is 15.0-50.0g/L.

Further, a volume by volume concentration of the compound dispersant in the mixed electroplating solution is 15.0-50.0ml/L.

Further, a mass-volume concentration of graphene in the mixed electroplating solution is 1.0-20.0g/L.

Further, a barrel plating current density of the mixed electroplating solution is 0.5-0.7A/dm2^{z}.

Further, a rack plating current density of the mixed electroplating solution is 0.7-1.0*A*/*dm*².

A preparation method of a mixed electroplating solution, comprising the following steps:
S1, preparing a silver-based aqueous solution, wherein in the silver-based aqueous solution, a mass-volume concentration of KCN is 90.0-200.0g/L, and a mass-volume concentration of silver ions is 15.0-50.0g/L;
S2, adding the compound dispersant and graphene to the silver-based aqueous solution and stirring; and
S3, supplementing the silver-based aqueous solution to the mixture obtained in S2 and stirring to prepare the mixed electroplating solution, wherein in the mixed electroplating solution, a volume by volume concentration of the compound dispersant is 15.0-50.0ml/L, and a mass-volume concentration of the graphene is 1.0-20.0g/L.

According to the compound dispersant of the present invention, components cooperate synergistically, and lipophilic groups in the dispersants can be adsorbed on the surfaces of graphene particles to form a coating layer which can effectively block or slow down agglomeration of graphene in the dispersion solution. Moreover, hydrophilic groups in the dispersants are bonded with OH- ions in water to ensure that graphene is dispersed uniformly and stably in the dispersion solution.

The preparation method of the compound dispersant of the present invention is simple to operate, and by which the compound dispersant is prepared can effectively block or slow down the agglomeration of graphene in the dispersion solution and ensure that the graphene is dispersed in the dispersion solution uniformly and stably.

According to the mixed electroplating solution of the present invention, the compound dispersant can effectively block or slow down the agglomeration of the graphene, and ensure that the graphene is dispersed stably and uniformly in the mixed electroplating solution, thereby improving the uniformity of graphene dispersed in a silver-graphene electroplating layer of an electroplated product and improving the performances of the electroplated product.

### DETAILED DESCRIPTIONS OF THE PREFERRED EMBODIMENTS

The specific embodiments of a compound dispersant and a preparation method, and a mixed electroplating solution and a preparation method of the present invention are further described below in conjunction with examples. The compound dispersant and the preparation method, and the mixed electroplating solution and the preparation method of the present invention are not limited to the description of the following examples.

The compound dispersant of the present invention is composed of distilled water, a nonionic surfactant, an anionic surfactant and wetting agents, wherein the nonionic surfactant is a Tween compound, and the wetting agents include a hydrocarbyl sulfate salt compound and a hydrocarbyl sulfonate salt compound.

According to the compound dispersant of the present invention, components cooperate synergistically, and lipophilic groups in the dispersants can be adsorbed on the surfaces of graphene particles to form a coating layer which can effectively block or slow down agglomeration of graphene in the dispersion solution. Moreover, hydrophilic groups in the dispersants are bonded with OH- ions in water to ensure that graphene is dispersed uniformly and stably in the dispersion solution.

A preparation method of a compound dispersant of the present invention, comprising the following steps:
Step 1, adding a hydrocarbyl sulfate salt compound and a Tween compound to distilled water at a temperature T0, 40°C≤T0≤60°C, and stirring for t0, 5min≤t0≤10min; and
Step 2, adding a hydrocarbyl sulfonate salt compound to the mixture obtained in Step 1, supplementing with distilled water, stirring for t1 to prepare the compound dispersant, 5min≤t1≤15min.

The preparation method of the compound dispersant of the present invention is simple to operate, and by which the compound dispersant is prepared can effectively block or slow down the agglomeration of graphene in the dispersion solution and ensure that the graphene is dispersed in the dispersion solution uniformly and stably.

A mixed electroplating solution of the present invention, comprising the compound dispersant, a silver-based aqueous solution and graphene, the silver-based aqueous solution comprises KCN and silver ions.

According to the mixed electroplating solution of the present invention, the compound dispersant can effectively block or slow down the agglomeration of the graphene, and ensure that the graphene is dispersed stably and uniformly in the mixed electroplating solution, thereby improving the uniformity of graphene dispersed in a silver-graphene electroplating layer of an electroplated product and improving the performances of the electroplated product.

A preparation method of a mixed electroplating solution of the present invention, comprising the following steps:
S1, preparing a silver-based aqueous solution, wherein in the silver-based aqueous solution, a mass-volume concentration of KCN is 90.0-200.0g/L, and a mass-volume concentration of silver ions is 15.0-50.0g/L;
S2, adding the compound dispersant and graphene to the silver-based aqueous solution and stirring; and
S3, supplementing the silver-based aqueous solution to the mixture obtained in S2 and stirring to prepare the mixed electroplating solution, wherein in the mixed electroplating solution, a volume by volume concentration of the compound dispersant is 15.0-50.0ml/L, and a mass-volume concentration of the graphene is 1.0-20.0g/L.

The present invention relates to a preparation method of the mixed electroplating solution, which is simple to operate, wherein graphene is distributed uniformly and stably.

The compound dispersant and the preparation method, and the mixed electroplating solution and the preparation method of the present invention are further described below in conjunction with specific examples.

The following is an embodiment of the compound dispersant of the present invention.

The compound dispersant of the present invention is composed of distilled water, a nonionic surfactant, an anionic surfactant and wetting agents, wherein the nonionic surfactant is a Tween compound, and the wetting agents include a hydrocarbyl sulfate salt compound and a hydrocarbyl sulfonate salt compound.

Further, the hydrocarbyl sulfate salt compound includes sodium 2-ethylhexyl sulfate.

Further, a mass fraction of the hydrocarbyl sulfate salt compound in the complex dispersant of the present invention is 5-8%. Further, the mass fraction of the hydrocarbyl sulfate salt compound in the compound dispersant of the present invention is 5%, 6%, 7% or 8%.

Further, the hydrocarbyl sulfonate salt compound includes at least one of dioctyl sulfosuccinate sodium salt and dihexyl sodium sulfosuccinate.

Further, a mass fraction of the hydrocarbyl sulfonate salt compound in the compound dispersant of the present invention is 6-10%. Further, the mass fraction of the hydrocarbyl sulfonate salt compound in the compound dispersant of the present invention is 6%, 7%, 8%, 9% or 10%.

Further, the Tween compound includes Tween-20. Further, the Tween compound may also be one or more of Tween-20, Tween-40, Tween-60 and Tween-80, wherein Tween-20 is preferred in the compound dispersant of the present invention since it has an optimal effect.

Further, a mass fraction of the Tween compound in the compound dispersant of the present invention is 4-6%. Further, the mass fraction of the Tween compound in the complex dispersant of the present invention is 4%, 5% or 6%.

The following is an embodiment of the preparation method of the compound dispersant of the present invention.

The preparation method of the compound dispersant of the present invention includes the following steps.

In Step 1, a hydrocarbyl sulfate salt compound and a Tween compound are added to distilled water at a temperature T0, 40°C≤T0≤60°C, and stirred for t0, 5min≤t0≤10min.

Further, T0 is 40°C, 45°C, 50°C, 55°C or 60°C.

Further, T0 is 5min, 6min, 7min, 8min, 9min or 10min.

In Step 2, the hydrocarbyl sulfonate salt compound is added to the mixture obtained in Step 1, supplemented with distilled water and stirred for t1 to prepare the compound dispersant, 5min≤t1≤15min.

Further, t1 is 5min, 6min, 7min, 8min, 9min, or 10min.

Specifically, when pre-preparing a compound dispersant with a mass of M kg, and the required mass of distilled water is calculated. In Step 1, 15-45% (15%, 20%, 25%, 30%, 35%, 40% or 45%) of the required mass of distilled water is taken, heated to T0, added with a hydrocarbyl sulfate salt compound and a Tween compound and stirred for t0. In Step 2, the hydrocarbyl sulfonate salt compound is added to the mixture obtained in Step 1, supplemented with distilled water, and stirred for t1 to obtain M kg of the compound dispersant.

The followings are specific examples of the compound dispersant and the preparation method of the present invention.

### Example 1:

The compound dispersant of this example is composed of distilled water, a nonionic surfactant and a wetting agent, wherein the nonionic surfactant includes a hydrocarbyl sulfate salt compound and a hydrocarbyl sulfonate salt compound; the hydrocarbyl sulfate salt compound includes sodium 2-ethylhexyl sulfate; the hydrocarbyl sulfonate salt compound includes dioctyl sulfosuccinate sodium salt; the nonionic surfactant is a Tween compound, the Tween compound including Tween-20; and in the compound dispersant, a mass fraction of the hydrocarbyl sulfate salt compound is 5%, a mass fraction of the hydrocarbyl sulfonate salt compound is 6%, a mass fraction of the Tween compound is 4%, and the balance is distilled water.

The preparation method of the compound dispersant in this example includes the following steps:
Step 1, adding the hydrocarbyl sulfate salt compound and the Tween compound to distilled water at a temperature of 50°C, and stirring for 10min; and
Step 2, adding the hydrocarbyl sulfonate salt compound to the mixture obtained in Step 1, supplementing distilled water, and stirring for 10min to obtain the compound dispersant.

### Example 2:

The compound dispersant of this example is composed of distilled water, a nonionic surfactant and a wetting agent, wherein the nonionic surfactant includes a hydrocarbyl sulfate salt compound and a hydrocarbyl sulfonate salt compound; the hydrocarbyl sulfate salt compound includes sodium 2-ethylhexyl sulfate; the hydrocarbyl sulfonate salt compound includes dioctyl sulfosuccinate sodium salt; the nonionic surfactant is a Tween compound, the Tween compound including Tween-20; and in the compound dispersant, a mass fraction of the hydrocarbyl sulfate salt compound is 8%, a mass fraction of the hydrocarbyl sulfonate salt compound is 10%, a mass fraction of the Tween compound is 6%, and the balance is distilled water.

The preparation method of the compound dispersant in this example includes the following steps:
Step 1, adding the hydrocarbyl sulfate salt compound and the Tween compound to distilled water at a temperature of 50°C, and stirring for 10min; and
Step 2, adding the hydrocarbyl sulfonate salt compound to the mixture obtained in Step 1, supplementing distilled water, and stirring for 10min to obtain the compound dispersant.

### Example 3:

The compound dispersant of this example is composed of distilled water, a nonionic surfactant and a wetting agent, wherein the nonionic surfactant includes a hydrocarbyl sulfate salt compound and a hydrocarbyl sulfonate salt compound; the hydrocarbyl sulfate salt compound includes sodium 2-ethylhexyl sulfate; the hydrocarbyl sulfonate salt compound includes dioctyl sulfosuccinate sodium salt; the nonionic surfactant is a Tween compound, the Tween compound including Tween-20; and in the compound dispersant, a mass fraction of the hydrocarbyl sulfate salt compound is 7%, a mass fraction of the hydrocarbyl sulfonate salt compound is 8%, a mass fraction of the Tween compound is 5%, and the balance is distilled water.

The preparation method of the compound dispersant in this example includes the following steps:
Step 1, adding the hydrocarbyl sulfate salt compound and the Tween compound to distilled water at a temperature of 60°C, and stirring for 5min; and
Step 2, adding the hydrocarbyl sulfonate salt compound to the mixture obtained in Step 1, supplementing distilled water, and stirring for 15min to obtain the compound dispersant.

The following is an embodiment of a mixed electroplating solution of the present invention.

The mixed electroplating solution of the present invention includes the compound dispersant, a silver-based aqueous solution and graphene, wherein the silver-based aqueous solution includes KCN and silver ions.

Further, a mass-volume concentration of KCN in the silver-based aqueous solution is 90.0-200.0g/L. Further, the mass-volume concentration of KCN in the silver-based aqueous solution is 90.0g/L, 100.0g/L, 110.0g/L, 120.0g/L, 130.0g/L, 140.0g/L, 150.0g/L, 160.0g/L, 170.0g/L, 180.0g/L, 190.0g/L or 200.0g/L.

Further, a mass-volume concentration of silver ions in the silver-based aqueous solution is 15.0-50.0g/L. Further, the mass-volume concentration of silver ions in the silver-based aqueous solution is 15.0g/L, 20.0g/L, 25.0g/L, 30.0g/L, 35.0g/L, 40.0g/L, 45.0g/L or 50.0g/L.

Further, the silver ions are provided by an aqueous solution prepared by electrolysis of a silver plate.

Further, a volume by volume concentration of the compound dispersant in the mixed electroplating solution of the present invention is 15-50ml/L. Further, the volume by volume concentration of the compound dispersant in the mixed electroplating solution of the present invention is 15ml/L, 20ml/L, 25ml/L, 30ml/L, 35ml/L, 40ml/L, 45ml/L or 50ml/L.

Further, a mass-volume concentration of graphene in the mixed electroplating solution of the present invention is 1.0-20.0g/L Further, the mass-volume concentration of graphene in the mixed electroplating solution of the present invention is 1.0g/L, 2.0g/L, 3.0g/L, 4.0g/L, 5.0g/L, 6.0g/L, 7.0g/L, 8.0g/L, 9.0g/L, 10.0g/L, 11.0g/L, 12.0g/L, 13.0g/L, 14.0g/L, 15.0g/L, 16.0g/L, 17.0g/L, 18.0g/L, 19.0g/L or 20.0g/L.

Further, a barrel plating current density of the mixed electroplating solution of the present invention is 0.5-0.7A/dm². Further, the rolling plating current density of the mixed electroplating solution of the present invention is 0.5A/dm², 0.6A/dm² or 0.7A/dm².

Further, a rack plating current density of the mixed electroplating solution of the present invention is 0.7-1.0A/dm². Further, the rack plating current density of the mixed electroplating solution of the present invention is 0.7A/dm², 0.8A/dm², 0.9A/dm², or 1.0A/dm².

The following is an embodiment of a preparation method of the mixed electroplating solution of the present invention.

A preparation method of a mixed electroplating solution of the present invention, comprising the following steps:
S1, preparing a silver-based aqueous solution, wherein in the silver-based aqueous solution, a mass-volume concentration of KCN is 90.0-200.0g/L, and a mass-volume concentration of silver ions is 15.0-50.0g/L; and
S2, adding the compound dispersant and graphene to the silver-based aqueous solution and stirring; and
S3, supplementing the silver-based aqueous solution to the mixture obtained in S2 and stirring to prepare the mixed electroplating solution, wherein in the mixed electroplating solution, a volume by volume concentration of the compound dispersant is 15.0-50.0ml/L, and a mass-volume concentration of the graphene is 1.0-20.0g/L.

The following is a specific example of the mixed electroplating solution of the present invention.

### Example 4:

The mixed electroplating solution of this example includes the compound dispersant of Example 1, a silver-based aqueous solution and graphene, wherein the silver-based aqueous solution includes KCN and silver ions; in the silver-based aqueous solution, a mass-volume concentration of KCN is 150.0g/L, and a mass-volume concentration of the silver ions is 30.0g/L; and in the mixed electroplating solution, a volume by volume concentration of the compound dispersant is 30.0ml/L, and a volume by volume concentration of the graphene is 2.0g/L.

Further, a barrel plating current density of the mixed electroplating solution in this example is 0.6*A*/*dm*².

Further, a rack plating current density of the mixed electroplating solution in this example is 0.8*A*/*dm*².

### Example 5:

The mixed electroplating solution of this example includes the compound dispersant of Example 2, a silver-based aqueous solution and graphene, wherein the silver-based aqueous solution includes KCN and silver ions; in the silver-based aqueous solution, a mass-volume concentration of KCN is 150.0g/L, and a mass-volume concentration of the silver ions is 30.0g/L; and in the mixed electroplating solution, a volume by volume concentration of the compound dispersant is 30.0ml/L, and a volume by volume concentration of the graphene is 2.0g/L.

Further, a barrel plating current density of the mixed electroplating solution in this example is 0.6*A*/*dm*².

Further, a rack plating current density of the mixed electroplating solution in this example is 0.8*A*/*dm*².

### Example 6:

The mixed electroplating solution of this example includes the compound dispersant of Example 2, a silver-based aqueous solution and graphene, wherein the silver-based aqueous solution includes KCN and silver ions; in the silver-based aqueous solution, a mass-volume concentration of KCN is 200.0g/L, and a mass-volume concentration of the silver ions is 50.0g/L; and in the mixed electroplating solution, a volume by volume concentration of the compound dispersant is 50.0ml/L, and a volume by volume concentration of the graphene is 20.0g/L.

Further, a barrel plating current density of the mixed electroplating solution in this example is 0.5*A*/*dm*².

Further, a rack plating current density of the mixed electroplating solution in this example is 0.7*A*/*dm*²*.*

### Example 7:

The mixed electroplating solution of this example includes the compound dispersant of Example 1, a silver-based aqueous solution and graphene, wherein the silver-based aqueous solution includes KCN and silver ions; in the silver-based aqueous solution, a mass-volume concentration of KCN is 90.0g/L, and a mass-volume concentration of the silver ions is 15.0g/L; and in the mixed electroplating solution, a volume by volume concentration of the compound dispersant is 15.0ml/L, and a volume by volume concentration of the graphene is 1.0g/L.

Further, a barrel plating current density of the mixed electroplating solution in this example is 0.7*A*/*dm*².

Further, a rack plating current density of the mixed electroplating solution in this example is 1.0*A*/*dm*².

### Example 8:

The mixed electroplating solution of this example includes the compound dispersant of Example 3, a silver-based aqueous solution and graphene, wherein the silver-based aqueous solution includes KCN and silver ions; in the silver-based aqueous solution, a mass-volume concentration of KCN is 150.0g/L, and a mass-volume concentration of the silver ions is 35.0g/L; and in the mixed electroplating solution, a volume by volume concentration of the compound dispersant is 35.0ml/L, and a volume by volume concentration of the graphene is 10.0g/L.

Further, a barrel plating current density of the mixed electroplating solution in this example is 0.6*A*/*dm*².

Further, a rack plating current density of the mixed electroplating solution in this example is 0.9*A*/*dm*².

### Blank electroplating solution:

The blank electroplating solution of this example includes a silver-based aqueous solution and the graphene, wherein the silver-based aqueous solution includes KCN and silver ions; in the silver-based aqueous solution, a mass volume concentration mass-volume concentration of KCN is 150.0g/L, and a mass-volume concentration of the silver ions is 30.0g/L; and in the mixed electroplating solution, a mass-volume concentration of the dispersant is 2.0g/L.

Further, a barrel plating current density of the blank electroplating solution is 0.6*A*/*dm*².

Further, a rack plating current density of the blank electroplating solution is 0.8*A*/*dm*².

### Example 9:

The compound dispersant of this example is composed of distilled water, a nonionic surfactant and a wetting agent, wherein the nonionic surfactant includes a hydrocarbyl sulfate salt compound and a hydrocarbyl sulfonate salt compound; the hydrocarbyl sulfate salt compound includes sodium 2-ethylhexyl sulfate; the hydrocarbyl sulfonate salt compound includes dioctyl sulfosuccinate sodium salt; the nonionic surfactant is a Tween compound, the Tween compound including Tween-20; and in the compound dispersant, a mass fraction of the hydrocarbyl sulfate salt compound is 6%, a mass fraction of the hydrocarbyl sulfonate salt compound is 9%, a mass fraction of the Tween compound is 5%, and the balance is distilled water.

The preparation method of the compound dispersant in this example includes the following steps:
Step 1, adding the hydrocarbyl sulfate salt compound and the Tween compound to distilled water at a temperature of 45°C, and stirring for 8min; and
Step 2, adding the hydrocarbyl sulfonate salt compound to the mixture obtained in Step 1, supplementing with distilled water, and stirring for 12min to obtain the compound dispersant.

### Example 10:

The compound dispersant of this example is composed of distilled water, a nonionic surfactant and a wetting agent, wherein the nonionic surfactant includes a hydrocarbyl sulfate salt compound and a hydrocarbyl sulfonate salt compound; the hydrocarbyl sulfate salt compound includes sodium 2-ethylhexyl sulfate; the hydrocarbyl sulfonate salt compound includes dihexyl sodium sulfosuccinate and dioctyl sulfosuccinate sodium salt; the nonionic surfactant is a Tween compound, the Tween compound including Tween-20; and in the compound dispersant, a mass fraction of the hydrocarbyl sulfate salt compound is 6%, a mass fraction of the hydrocarbyl sulfonate salt compounds is 8% (wherein a mass fraction of the dioctyl sulfosuccinate sodium salt is 3%, and a mass fraction of the dihexyl sodium sulfosuccinate is 5%), a mass fraction of the Tween compound is 6%, and the balance is distilled water.

The preparation method of the compound dispersant in this example includes the following steps:
Step 1, adding the hydrocarbyl sulfate salt compound and the Tween compound to distilled water at a temperature of 55°C, and stirring for 9min; and
Step 2, adding the hydrocarbyl sulfonate salt compound to the mixture obtained in Step 1, supplementing with distilled water, and stirring for 8min to obtain the compound dispersant.

### Example 11:

The mixed electroplating solution of this example includes the compound dispersant of Example 9, a silver-based aqueous solution and graphene, wherein the silver-based aqueous solution includes KCN and silver ions; in the silver-based aqueous solution, a mass-volume concentration of KCN is 170.0g/L, and a mass-volume concentration of the silver ions is 25.0g/L; and in the mixed electroplating solution, a volume by volume concentration of the compound dispersant is 20.0ml/L, and a mass-volume concentration of the graphene is 8.0g/L.

Further, a barrel plating current density of the mixed electroplating solution in this example is 0.6*A*/*dm*².

Further, a rack plating current density of the mixed electroplating solution in this example is 0.8*A*/*dm*².

### Example 12:

The mixed electroplating solution of this example includes the compound dispersant of Example 10, a silver-based aqueous solution and graphene, wherein the silver-based aqueous solution includes KCN and silver ions; in the silver-based aqueous solution, a mass-volume concentration of KCN is 140.0g/L, and a mass-volume concentration of the silver ions is 35.0g/L; and in the mixed electroplating solution, a volume by volume concentration of the compound dispersant is 40.0ml/L, and a mass-volume concentration of the graphene is 15.0g/L.

Further, a barrel plating current density of the mixed electroplating solution in this example is 0.7*A*/*dm*².

Further, a rack plating current density of the mixed electroplating solution in this example is 0.7*A*/*dm*².

This example further discloses an electroplating method, which is used for electroplating a graphene-sliver mixed electroplating layer to a product to be electroplated using the mixed electroplating solution and specifically includes the following steps: cleaning the product to be electroplated, putting the cleaned product to be electroplated into a potassium cyanide solution for cyanide activation, pre-plating sliver to the activated product to be electroplated, putting the pre-sliver-plated product to be electroplated into the mixed electroplating solution for electroplating, and washing the electroplated product with water for multiple times.

Table 1: the followings are physical parameters of the mixed electroplating solution of the respective examples and the blank electroplating solution (without adding the compound dispersant of the present invention), and experimental data of electroplated products electroplated by respective examples and electroplated products electroplated by the blank electroplating solution (the larger the absolute value of zeta potential value, the better the dispersion of graphene particles in the mixed electroplating solution; the smaller the diameter value under particle size detection, the better the dispersion of graphene in the mixed electroplating solution; and the larger the wear resistance value, the better the wear resistance of the electroplated product):

**Table 1:**

| Serial No. | Zeta potential, /mV | Diameter under particle size detection, /d.nm | Abrasion resistance |
|---|---|---|---|
| Blank electroplating solution | -34.9 | 704.9 | 32.3 |
| Example 4: | -48.3 | 554.4 | 543.2 |
| Example 5 | -54.0 | 506.9 | 665.0 |
| Example 6 | -49.2 | 526.3 | 629.2 |
| Example 7 | -50.4 | 507.9 | 689.3 |
| Example 8 | -53.6 | 510.7 | 679.5 |
| Example 11 | -56.8 | 498.7 | 653.5 |
| Example 12 | -57.1 | 521.3 | 667.2 |

| | | | |
|---|---|---|---|
| Note: the wear resistance refers to an average number of bearable times per micron, with a unit: /time. | | | |

Through the above experimental data, it is shown that the mixed electroplating solution of the present invention ensures the stable and uniform distribution of graphene in the mixed electroplating solution, which can significantly improve the uniformity of graphene distribution in the silver-graphene electroplating layer, thereby significantly improving the product performances (including electrical conductivity, thermal conductivity, wear resistance, etc.) of the electroplated products, wherein the wear resistance of the electroplated products can be improved by more than 5 times.

The above content is a further detailed description of the present invention in conjunction with specific preferred embodiments, but it cannot be regarded that the specific embodiments of the present invention are limited to these descriptions. For a person of ordinary skill in the art to which the present invention belongs, without departing from the idea of the present invention, a number of simple deductions or replacements may be made, which should be regarded as falling within the protection scope of the present invention.

## Claims

1. A compound dispersant, composed of distilled water, a nonionic surfactant and a wetting agent, wherein the nonionic surfactant is a Tween compound, and the wetting agent includes a hydrocarbyl sulfate salt compound and a hydrocarbyl sulfonate salt compound.

2. The compound dispersant as claimed in claim 1, wherein the hydrocarbyl sulfate salt compound comprises sodium 2-ethylhexyl sulfate.

3. The compound dispersant as claimed in claim 1, wherein a mass fraction of the hydrocarbyl sulfate salt compound in the compound dispersant is 5-8%.

4. The compound dispersant as claimed in claim 1, wherein the hydrocarbyl sulfonate salt compound comprises at least one of dioctyl sulfosuccinate sodium salt and dihexyl sodium sulfosuccinate.

5. The compound dispersant as claimed in claim 1, wherein a mass fraction of the hydrocarbyl sulfonate salt compound in the compound dispersant is 6-10%.

6. The compound dispersant as claimed in claim 1, wherein the Tween-like compound comprises Tween-20.

7. The compound dispersant as claimed in claim 1, wherein a mass fraction of the Tween compound in the compound dispersant is 4-6%.

8. A preparation method of a compound dispersant, comprising the following steps:
Step 1, adding a hydrocarbyl sulfate salt compound and a Tween compound to distilled water at a temperature T0, 40°C≤T0≤60°C, and stirring for t0, 5min≤t0≤10min; and
Step 2, adding a hydrocarbyl sulfonate salt compound to the mixture obtained in Step 1, supplementing with distilled water, stirring for t1 to prepare the compound dispersant, 5min≤t1≤15min.

9. A mixed electroplating solution, comprising the compound dispersant as claimed in any one of claims 1 to 7, a silver-based aqueous solution and graphene, the silver-based aqueous solution comprises KCN and silver ions.

10. The mixed electroplating solution as claimed in claim 9, wherein a mass-volume concentration of KCN in the silver-based aqueous solution is 90.0-200.0g/L; and
a mass-volume concentration of silver ions in the silver-based aqueous solution is 15.0-50.0g/L.

11. The mixed electroplating solution as claimed in claim 9, wherein a volume by volume concentration of the compound dispersant in the mixed electroplating solution is 15.0-50.0ml/L; and
a mass-volume concentration of graphene in the mixed electroplating solution is 1.0-20.0g/L.

12. The mixed electroplating solution as claimed in claim 9, wherein a barrel plating current density of the mixed electroplating solution is 0.5-0.7*A*/*dm*²; and
a rack plating current density of the mixed electroplating solution is 0.7-1.0*A*/*dm*².

13. A preparation method of a mixed electroplating solution, comprising the following steps:
S1, preparing a silver-based aqueous solution, wherein in the silver-based aqueous solution, a mass-volume concentration of KCN is 90.0-200.0g/L, and a mass-volume concentration of silver ions is 15.0-50.0g/L; and
S2, adding the compound dispersant as claimed in any one of claims 1 to 7 and graphene to the silver-based aqueous solution and stirring; and
S3, supplementing the silver-based aqueous solution to the mixture obtained in S2 and stirring to prepare the mixed electroplating solution, wherein in the mixed electroplating solution, a volume by volume concentration of the compound dispersant is 15.0-50.0ml/L, and a mass-volume concentration of the graphene is 1.0-20.0g/L.
